# EUROPÄISCHE PATENTANMELDUNG

(11) **EP 0 949 525 A1**
(43) Veröffentlichungstag der Anmeldung: **13.10.1999**
(21) Anmeldenummer: 99112038.7
(22) Anmeldetag: 29.03.1995
(51) Int. Cl.: G02B 21/22

(54) **Streomikroskop**

(30) Priorität: 30.03.1994 CH 94994
(62) Teilanmeldung aus: 95916603.4
(71) Anmelder: Leica Microsystems AG, 9435 Heerbrugg (CH)
(72) Erfinder: Spink, Roger, 9436 Balgach (CH); Braunecker, Bernhard, 9445 Rebstein (CH); Rogers, John Rice, 9435 Heerbrugg (CH); Zimmer, Klaus-Peter, 9435 Heerbrugg (CH)
(74) Vertreter: Stamer, Harald

(57) **Zusammenfassung**

Die Erfindung betrifft ein Stereomikroskop mit einem linken und einem rechten Stereostrahlengang (1a, b) und einer Verstelleinrichtung zur Wahl einer Stereobasis (d). Das Hauptobjektiv (8) ist zwischen einem zu betrachtenden Objekt und der Verstelleinrichtung (12) - die vorzugsweise als mechanooptisches Schaltelement (3a) ausgebildet ist - angeordnet. Aus dieser Anordnung ergibt sich eine integrierte Bauweise mit geringen Lichtverlusten.

## Beschreibung

Die Erfindung betrifft ein Stereomikroskop nach dem Oberbegriff des Anspruches 1.

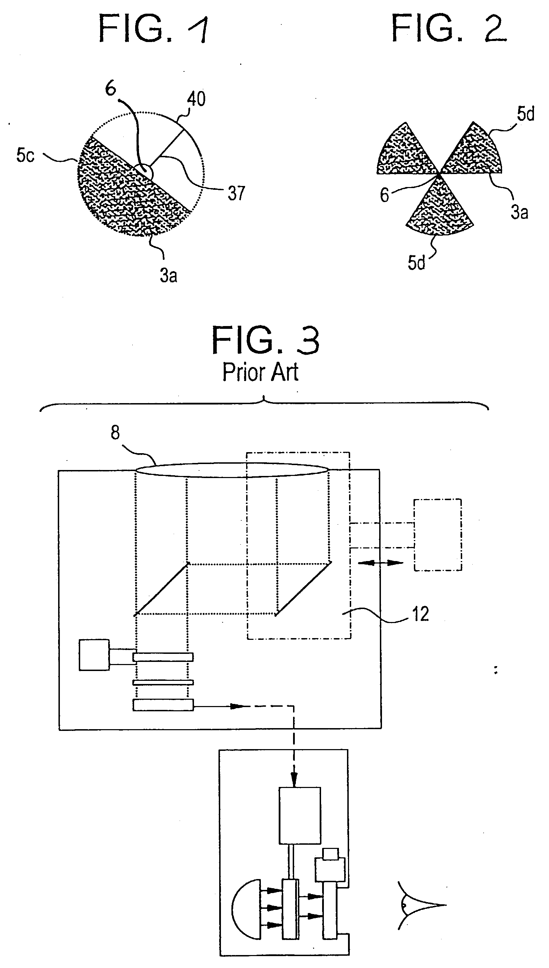

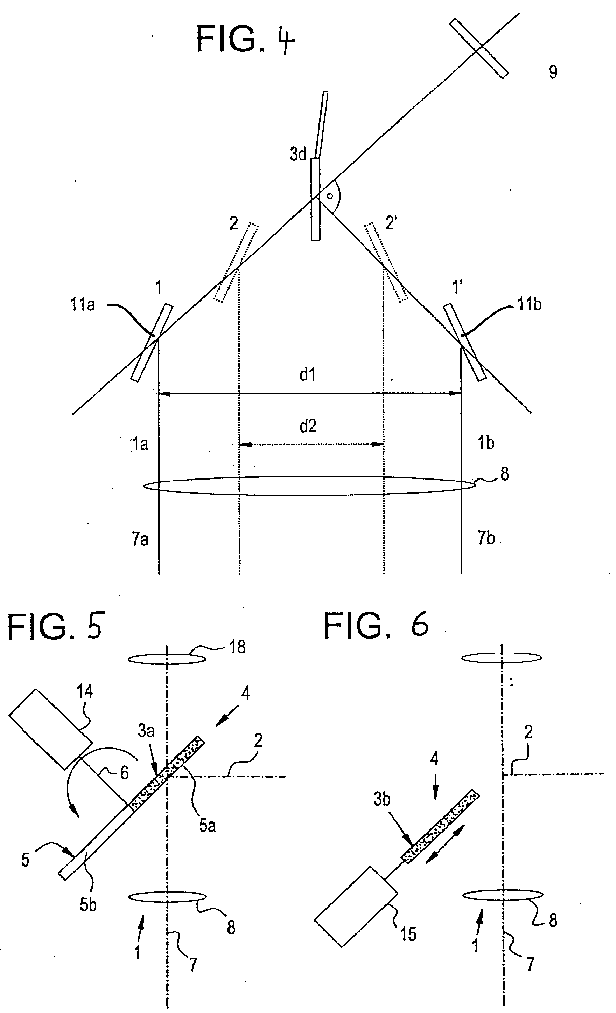

Stereomikroskope mit einer Einstellmöglichkeit der Stereobasis sind in der US 3 818 125 (Butterfield, 1971) beschrieben. Obwohl dort verschiedene Variationen von Möglichkeiten zur Stereobasis-Variation beschrieben sind, haben sich solche Einrichtungen in der Praxis nicht durchgesetzt. Und dies, obwohl die bekannten und von Butterfield angegebenen Nachteile bei Stereomikroskopen ohne Stereobasis-Verstellung nach wie vor vorhanden sind. Insofern wird auf die betreffenden Beschreibungsteile - insbesondere in Spalte 2, Zeilen 43-62, - bei Butterfield verwiesen. Der Grund für die Nichtanwendung der Lehren von Butterfield liegt offensichtlich in verschiedenen Problemen, die sich aus seinen Lösungsvorschlägen ergeben. So scheidet beispielsweise die Anwendung von Prismen (z.B. Fig.5-9 bei Butterfield) aus, weil diese, wie Butterfield selbst zugibt (Spalte 9, Zeilen 65 und 66), Farbaberrationen mit sich bringen, die die Farbqualität des betrachteten Bildes negativ beeinflussen können. Die von Butterfield vorgeschlagenen Variationen mit verschiebbaren Blenden (10, z.B. Fig.2 und 5) weisen darüber hinaus den Nachteil auf, dass durch eine Verschiebung derselben nicht nur die Stereobasis verstellt, sondern ausserdem auch die Bildhelligkeit abgedunkelt bzw. verändert wird, was nachteiligerweise insbesondere bei kleinen Stereobasen zu einer zu geringen Lichtausbeute führen kann.

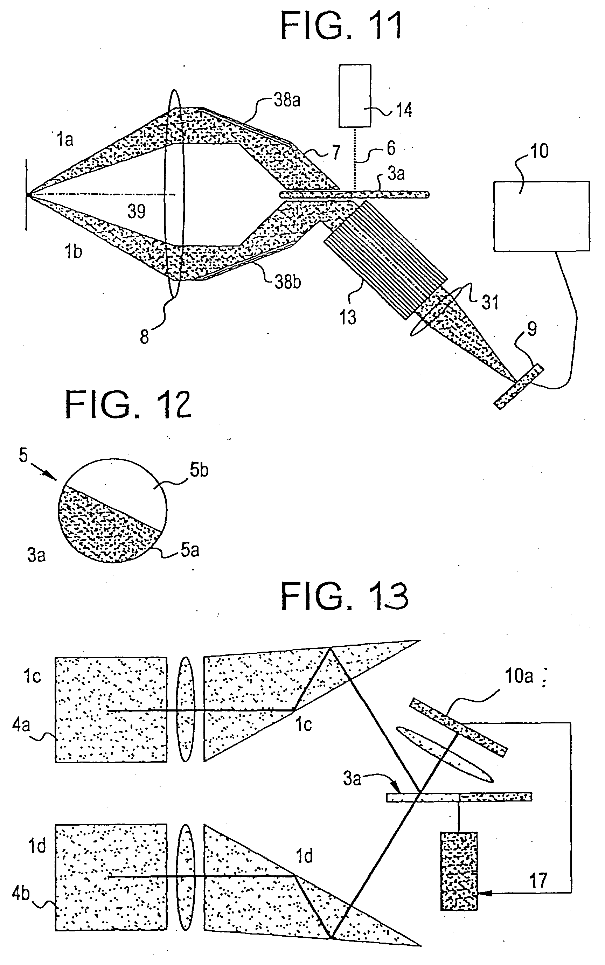

Ähnliche Nachteile treten bei dem Lösungsvorschlag gemäss Fig. 10 von Butterfield auf. Durch das Verschwenken der Spiegel (50) wird nämlich nicht nur die Stereobasis verstellt, sondern vielmehr auch die Apertur verändert, was wieder zu entsprechenden Lichtverlusten führen kann.

Die von Butterfield vorgeschlagenen Varianten nach Fig. 11 und 12 sind auch insofern aufwendig und nur schwer realisierbar, als dort zwei parallele Linsensysteme (54) erforderlich sind, die eine entsprechende Verteuerung und auch eine entsprechende Baugrössenerhöhung - verbunden mit weiteren Lichteinbussen durch eventuell zu geringe Apertur - mit sich bringen. Darüber hinaus ist es in der Regel auch schwierig, solche parallelen Linsensysteme so zu justieren, dass sie identische Eigenschaften aufweisen. Sind jedoch die Eigenschaften nicht identisch, kann dies zu Ermüdungen beim Betrachter führen, insbesondere wenn diesem eine Videokamera und ein Monitor vorgeschaltet sind, da er dort nicht - wie bei zwei Okularstrahlengängen - die Möglichkeit hat, individuell nachzukorrigieren.

Der Stand der Technik kennt weiterhin die DE-U-93 05 447. Dort wird ein Stereomikroskop geoffenbart, das einen linken und einen rechten Stereostrahlengang durch ein einziges Hauptobjektiv lenkt und eine Verstelleinrichtung zur Wahl einer Stereobasis vorsieht, wobei das Hauptobjektiv zwischen einem zu betrachtenden Objekt und der Verstelleinrichtung angeordnet ist. Die beiden dem Beobachter zugewandten Strahlengänge sind jedoch - wie üblich - getrennt, so dass im Falle des Anwendens einer Viedoaufzeichnungseinheit pro Strahlengang je ein Aufzeichnungselement vorzusehen wäre.

Die JP-A-88 152 699 offenbart ein Mikroskop mit einem Okularstrahlengang und einem Strahlenteiler, der für das Einspiegeln von Informationen von einem Display in den Okularstrahlengang geeignet ist. Diese Druckschrift offenbart auch die Verwendung von mechanooptischen Schaltelementen, die alternierend von einem gesperrten in einen transmissiven Zustand überführbar sind. Es wird jedoch keine verstellbare Stereobasis geoffenbart, weshalb die Beobachtung nicht optimiert werden kann. Ausserdem ist die Baugrösse, bedingt durch zwei parallele unabhängige Strahlengänge - wie im Stand der Technik vor der Erfindung allgemein üblich -, relativ gross.

Es ist daher die Aufgabe der vorliegenden Erfindung, ein System zu entwickeln, das die Lichtintensität im Strahlengang - zumindest über einen gewissen Zeitraum und für jeden Strahlengang getrennt - nicht nennenswert reduziert. Weiterhin sollen - wie an sich bekannt - Aufnahmen mit nur einer einzigen Bildaufnahmevorrichtung, z.B. mit einer einzigen Videokamera, ermöglicht sein und die Baugrösse des Stereomikroskopes auf ein Minimum beschränkt werden.

Gelöst wird diese Aufgabe beispielsweise durch die Merkmale des Anspruches 1. Durch die Anordnung der Strahlengänge und Schaltelemente ergibt sich eine integrierte Bauweise mit geringen Lichtverlusten und ohne die oben angeführten Nachteile. Durch die Zusammenführung der beiden Teilstrahlengänge wird gleichzeitig die Aufnahme durch nur ein Aufzeichnungsgerät möglich.

Eine konkrete Anwendung der Erfindung ergibt sich daher z.B. bei Video-Stereomikroskopen.

Für solche - aber auch für andere - Mikroskope wird eine spezielle Weiterbildung der Erfindung vorgeschlagen, die auch unabhängig von der Erfindung anwendbar ist. Zur Erläuterung des Hintergrundes:

Mikroskope weisen häufig Strahlenteiler auf, um den auf das zu vergrössernde Objekt gerichteten Strahlengang zu vervielfältigen.

An geteilten Strahlengängen sind u.a. häufig zusätzliche Betrachterokulare, Fototuben, Kameraanschlüsse oder Displays aller Art vorgesehen, deren Bilder eingeblendet - d.h. dem Bild des betrachteten Objekts überlagert - werden sollen. Dies trifft insbesondere auch auf Stereomikroskope zu, die eine Bildaufnahmevorrichtung zur Erzeugung einer Stereoansicht auf einem - gegebenenfalls vom Mikroskop entfernten - 3D-Display aufweisen.

Für den letzten Anwendungsfall wird fallweise sowohl für den dem linken Auge als auch für den dem rechten Auge zugeordneten Strahlengang je eine solche Bildaufnahmevorrichtung - z.B. je ein CCD - vorgesehen.

Für den Anwendungsfall mit dem eingeblendeten Display wird analog je ein Display für den dem linken als auch dem rechten Auge zugeordneten Strahlengang - z.B. je ein CRT - vorgesehen.

Diese bekannten Stereomikroskope weisen somit den Nachteil auf, dass zwei Vergrösserungseinrichtungen (Zoom, Wechsler) und zwei Bildaufnahmevorrichtungen bzw. zwei Displays, mitsamt entsprechenden Optiken, notwendig sind. Dabei müssen die linken und rechten Bildaufnahmevorrichtungen bzw. Optiken zueinander justiert werden.

In anderen bekannten Stereomikroskopen gibt es auch Lösungen mit nur einer einzigen Bildaufnahmevorrichtung. Dort werden sowohl der linke als auch der rechte Strahlengang bzw. das in ihnen befindliche Strahlenbündel abwechselnd der einzigen Bildaufnahmevorrichtung zugeführt. Durch einen solchen Aufbau wird eine zweite Bildaufnahmevorrichtung eingespart und unter anderem die serielle Aufzeichnung eines Stereobildpaares auf eine Videoaufzeichnungsvorrichtung erleichtert. Der Umschaltvorgang zwischen den beiden Strahlengängen wird dabei mit Strahlenteilern und Shuttern erreicht, die über Polarisationsänderungen mit entsprechend angeordneten Analysatoren das jeweils nicht gewünschte Strahlenbündel abblocken.

Ein solches Stereomikroskop mit geometrische Überlagerung des rechten und linken Teilbildes ist beispielsweise in der US 5 007 715 beschrieben.

Das in der US 5 007 715 beschriebene System hat den Nachteil, dass sowohl bei der Polarisierung (ca. 50%) als auch bei der Übereinanderlegung (ca. 50%) der beiden polarisierten Strahlenbündel mittels eines Strahlenteilers bis zu 80% der vorhandenen Lichtintensität des jeweiligen Strahlenbündels (100 %) verloren gehen. Als weiterer Nachteil kann sich ein teilweises Überlagern der beiden unterschiedlichen Bildinformationen des rechten bzw. linken Bildstrahlenganges bemerkbar machen, wenn die Abdunkelung durch die Analysatoren nicht hundertprozentig ist; was vor allem auch dann auftreten kann, wenn die Polarisatoren nicht einwandfrei arbeiten. Nachdem aber gerade bei Mikroskopen die Helligkeit am zu betrachtenden Objekt nicht beliebig gesteigert werden kann, ist der permanente Verlust der Lichtintensität nachteilig. Das teilweise Überlagern kann hingegen zu unnötigen Belastungen für die Sehorgane des Betrachters führen.

Ein ähnliches bekanntes System ist in der US 5 003 385 beschrieben, wo ebenfalls ca. 80% der Lichtintensität des linken und rechten Strahlenganges absorbiert werden, bevor das Licht auf die einzige Kamera trifft.

Ein etwas anderes System, bei dem die Polarisation des Lichtes unberücksichtigt bleibt, ist in der US 5 028 994 beschrieben. Dort wird das Licht aus zwei ersten Strahlengängen (linker und rechter Strahlengang) zunächst je einem LC-Shutter (twisted nematic type) zugeführt, der den betreffenden Strahlengang öffnen oder schliessen kann. Beide Strahlengänge treffen sich - über Spiegel umgelenkt - an einem Strahlenteiler. Ist der eine Shutter geöffnet, so wird der zweite Shutter geschlossen, weshalb theoretisch an die nach dem Strahlenteiler angeordnete Kamera stets nur Licht aus einem der beiden ersten Strahlengänge kommen kann. An dem Strahlenteiler gehen je ca. 50% der Lichtintensität verloren; ebenso verliert man am Shutter auch im "geöffneten Zustand" je etwa 50%, da der beschriebene Shutteraufbau (vgl. Spalte 2, Zeile 48, bis Spalte 3, Zeile 29) nur Licht mit einer bestimmten Polarisationsrichtung durchlässt. Zudem kann es bei dem beschriebenen Shutter auch zu den oben erwähnten Nachteilen des teilweisen Überlagerns kommen.

Es ist daher die Aufgabe der vorliegenden Weiterbildung, ein System zu entwickeln, das die Lichtintensität im Strahlengang - zumindest über einen gewissen Zeitraum und für jeden Strahlengang getrennt - bei Verwendung von Strahlenteilern höchstens im Ausmass der dort verlorenen Lichtintensität (in der Regel ca. 50%) reduziert. Mit anderen Worten: Es soll ein Gewinn von etwa 50% der Lichtintensität - sowohl beim Fall des Aufnehmens, als auch beim Fall des Einblendens von Bildern - gegenüber herkömmlichen Stereomikroskopen möglich sein, obwohl nur eine einzige Bildaufnahmevorrichtung oder nur ein einziges Display für beide Strahlengänge vorgesehen ist. Weiterhin soll das Überlagern zwischen dem rechten und dem linken Bildstrahlengang ausgeschlossen sein.

Diese zusätzliche Aufgabe wird ebenso gelöst. Dieselben Probleme bzw. dieselben Aufgaben für Mikroskope mit einzuspiegelnden anstelle von aufzunehmenden Bildern werden erstmals auch durch eine Weiterbildung der vorliegenden Erfindung gelöst.

Für die spezielle Weiterverarbeitung von Videobildern, die von einem erfindungsgemässen Video-Stereomikroskop gewonnen wurden, wird auf die WO-A1-95/18512 verwiesen, die ebenso als im Rahmen dieser Offenbarung liegend gilt. Alle erwähnten Anmeldungen zusammen, bzw. die ihnen zugrundeliegenden Erfindungen, ergänzen sich bei entsprechenden Ausführungsbeispielen symbiotisch.

Das geometrische Ineinanderlegen von einem linken und rechten Stereostrahlengang ermöglicht sodann das Aufnehmen der beiden Strahlengänge durch nur eine Videokamera, so dass nebeneinander liegende Bilder zeitlich hintereinander aufgenommen und weiterverarbeitet werden können. Diese Weiterentwicklung der Erfindung ermöglicht somit auch das Wiedergeben von Bildern über einen Monitor, wie beispielsweise in der US 5 007 715 beschrieben. Die dort zur Figur im Abstrakt geoffenbarten Angaben gelten auch als hierin geoffenbart.

Die erfindungsgemässe Verwendung mechanischer Blenden, die entweder vollständig reflektieren oder Licht vollständig durchlassen, bewirkt wenigstens während der jeweiligen Zeitdauer einer bestimmten Schaltstellung der Blende die Weiterleitung der vollen Lichtintensität des im betreffenden Strahlengang befindlichen Lichtes. Es entfällt daher das Kodierungsverfahren für das Licht, wie z.B. bei Anwendung von Polarisation, wie auch bei Butterfield vorgeschlagen. Hier wird nur ein- oder ausgeblendet. Daraus ergibt sich ein Intensitätsgewinn von bis zu über 200%, verglichen zu bekannten Anordnungen mit Teilern und Polarisationsfiltern. Ein ungewolltes Überlagern von zwei Strahlengängen ist - vorteilhaft gegenüber der Polarisationsanwendung - ausgeschlossen. Durch diese Weiterbildung der Erfindung wird ausserdem auch die weitere Aufgabe somit gelöst, trotz geometrischer Strahlenteilung einen nur geringen Lichtintensitätsverlust zu bewirken.

Es ist zwar die Verwendung mechanischer Blenden in optischen Systemen - wenn auch für völlig andere Zwecke - grundsätzlich bekannt, so wird beispielsweise auf eine Nipkow-Scheibe verwiesen, wie sie beispielsweise in der US 5 067 805 dargestellt ist, oder auf starre mechanische Strahlenteiler, bei denen z.B. an einer Ringblende ein Teil des Lichtes im Strahlengang durchgelassen und ein anderer Teil zur Strahlenteilung reflektiert wird, jedoch reduzieren diese bekannten mechanischen Strahlenteiler den tatsächlichen Lichtintensitätsverlust nicht, da nach der Teilung in jedem nachfolgenden Strahlengang jeweils nur ein Teil der ursprünglich 100% Lichtintensität weitergeleitet wird. Der andere Teil ist ja durch den Teiler in den zweiten Strahlengang weitergelenkt.

Einzig Anwendungen mit monochromatischem Licht könnten Teilungsverluste an Teilern auf einen Rest reduzieren, was jedoch bei Wunsch auf Anwendung des gesamten Lichtspektrums nicht möglich ist.

Einen Teilaspekt der Erfindung findet man also bei einem Mikroskop, insbesondere einem Stereomikroskop, mit einem ersten Strahlengang und einem Strahlenteiler in diesem Strahlengang, wobei der Strahlenteiler als mechanooptisches oder elektrooptisches Schaltelement ausgebildet ist, das alternierend von einem reflektiven in einen transmissiven oder einen anderen reflektiven Zustand überführbar ist, wobei einer der beiden Zustände den Lichtweg für den ersten Strahlengang und der andere Zustand den Lichtweg für einen zweiten Strahlengang freigibt, während er den Lichtweg für den Betrachtungsstrahlengang sperrt. Ein solches Schaltelement ersetzt somit herkömmliche Strahlenteiler, wodurch der Lichtverlust wesentlich reduziert werden kann.

Im Rahmen der Erfindung liegen verschiedene weitere Ausbildungsarten und Varianten dazu, die in den abhängigen Ansprüchen beschrieben bzw. gekennzeichnet sind.

Bei einer bevorzugten Variante werden die Eintrittsstrahlenbündel des Stereomikroskopes nach dem (einzigen) Hauptobjektiv entweder mittels eines rotierenden Spiegels mit mindestens jeweils einem transmissiven und reflektiven Teilbereich oder mittels eines feststehenden Teilers und einer die Eintrittsstrahlengänge abwechselnd abdeckenden, rotierenden Blende geometrisch übereinander - jedoch zeitlich hintereinander - gelegt. Hierbei ist es günstig, wenn beide Strahlengänge gleiche optische Weglängen bis zur Bildaufnahmevorrichtung aufweisen. Im Sinne der Erfindung ist es dabei nicht wesentlich, in welcher Form die reflektierenden Blenden eingebracht werden. Translatorische Bewegungen sind dabei gleichzusetzen mit rotierenden Bewegungen oder sonstigen Schaltbewegungen. So können beispielsweise durchaus auch fotokameraverschluss-ähnliche Blenden vorgesehen werden, die jedoch an wenigstens einer Seite entsprechend verspiegelt sind. Eine Variante mit mikromechanischen Lamellenspiegeln ist ebenso denkbar, wobei solche Lamellenspiegel - zur Zeit gibt es diese im wesentlichen nur in Laborversuchen - in der Regel aus Silizium aufgebaut sind und durch elektrostatische Ladungen geschaltet werden.

Wird, wie in einem Ausführungsbeispiel, eine rotierende Glasscheibe benutzt, die an einer Hälfte verspiegelt ist, so ist damit eine praktische, leicht auszuwuchtende Anordnung gegeben, die jedoch einen kleinen Nachteil aufweist: An der nichtverspiegelten Glashälfte kommt es aufgrund des Planplatteneffektes zu einem Bildversatz. Um diesen zu vermeiden, ist bei einer bevorzugten Variante auf das Glas an dieser Stelle verzichtet, so dass dort ein vollständig freier Lichtdurchtritt möglich ist.

Nachdem bei allen eingeschobenen oder eingedrehten Blenden der Effekt der sich bewegenden Blende unter Umständen für Aufzeichnungen an Bildaufnahmevorrichtungen, z.B. CCD's, nachteilig sein kann, ist bei einigen Ausführungsformen weiter vorgesehen, dass die Verschiebe- bzw. Verdrehbewegung besonders schnell durchgeführt wird und die Blende in der dann eingenommenen Schaltstellung für eine gewisse Zeit verweilt. Bei rotierenden Blenden eignet sich dafür besoners ein Antrieb mit einem Steppermotor. Eine entsprechende Ergänzung oder Alternative zu dieser Technik ergibt sich durch eine getaktete Belichtungssteuerung einer gegebenenfalls zum Einsatz gelangenden Videokamera bzw. eines zum Einsatz gelangenden Displays.

Gegebenenfalls könnte über eine weitere Spiegelanordnung zusätzliches Licht über die erwähnte verspiegelte Fläche dem Objekt zugeführt werden. Aufwendigere sonstige Beleuchtungseinrichtungen könnten dadurch unter Umständen sogar entfallen.

Eine weitere Variante mit einem 50/50-Pupillenteiler ist insofern vorteilhaft, als nur ein Glasteiler pro Strahlengang erforderlich ist und im Okularstrahlengang in Abhängigkeit von der Teilerwirkung dieses Glasteilers ein Verhältnis von z.B. 25% Display und 50% Objekt oder (am Okular) z.B. 50% Display und 50% Objekt erreicht werden kann. Ersteres z.B. bei einem Glasteiler von ca. 1/1 Teilwirkung, letzteres z.B. mit einem Glasteiler von ca. 2/1 Teilwirkung.

Eine weitere Variante, die die Beleuchtung vollständig in den Aufbau integriert, ergibt sich, wenn das Schaltelement doppelt benutzt wird, indem die spiegelnde Fläche beidseitig genutzt wird. Es liegt im eingeschwenkten Zustand im Schnittpunkt der Achsen der ersten Strahlengänge vorzugsweise in einem Winkel von je 45° zu den erwähnten Achsen. In direkter Verlängerung eines der ersten Strahlengänge ist eine Lichtquelle angeordnet, deren Licht im eingeschwenkten Zustand des Schaltelements in den einen Strahlengang gespiegelt wird, während es im ausgeschwenkten Zustand direkt in den anderen ersten Strahlengang fällt. In dieser Weise ist eine optimale Beleuchtung von einem betrachteten Objekt möglich.

Weiter bevorzugt ist es, die Blende bzw. den Teilerspiegel möglichst nahe ans Hauptobjektiv zu stellen, um eine Vignettierung der wiedergegebenen Bilder zur vermeiden.

Eine Variante mit mehreren kreissegmentartigen Reflektoren reduziert die erforderliche Umdrehungszahl eines rotierenden Spiegels.

Die Verwendung von Planplatten als Stereobasiseinstellung ist baulich einfach. Die Nachteile der Anwendung von Prismen, wie bei Butterfield, entfallen dadurch. Der mechanische Aufbau ist einfach zu realisieren, eine Miniaturisierung und allfällige automatische und/oder Fern-Steuerung einfach. Eine Kopplung mit der Vergrösserungseinstellung des Stereomikroskopes und/oder mit einer Zoomeinstellung ist daher denkbar einfach. Die Lichtverluste sind gegenüber der Anwendung von Apertur-Blenden wie bei Butterfield minimal.

Anstelle der mechanisch bewegten Blenden könnten auch andersartige Blenden zum Einsatz gelangen, sofern sie nur imstande sind, hundertprozentig zwischen einem durchlassenden und sperrenden Zustand zu wechseln.

Die Erfindung ist insbesondere im Zusammenhang mit einem Stereomikroskop beschrieben. Im weitesten Sinn kann sie jedoch auch sinnvoll mit beliebigen anderen Strahlengängen angewendet werden.

Weitere Details und Ausführungen der Erfindung ergeben sich aus der Zeichnung. Die dort dargestellten Figuren zeigen:
- Fig. 1:: das Prinzip eines rotierenden Strahlenteilers mit einer Spiegelfläche;
- Fig. 2:: eine Variante zur Fig. 1;
- Fig. 3:: das Prinzip eines Aufbaus gemäss der US 5 007 715 mit erfindungsgemässer Verstelleinrichtung und nur einem Hauptobjektiv;
- Fig. 4:: das Prinzip eines Aufbaus mit einem LCD-Shutter-Element und zwei verschiebbaren Spiegeln;
- Fig. 5:: das Prinzip eines rotierenden Strahlenteilers mit einer Spiegelfläche;
- Fig. 6:: das Prinzip eines translatorisch verschiebbaren Strahlenteilers mit einer Spiegelfläche;
- Fig. 7:: das Prinzip eines elektronisch schaltbaren LCD-Shutter-Elements, das von einem spiegelnden in einen transmissiven Zustand umschaltbar ist;
- Fig. 8:: das Prinzip einer mikromechanischen Lamellenspiegel-Konstruktion als Strahlenteiler mit einer transmissiven und einer reflektiven Stellung;
- Fig. 9:: das Prinzip mit einer mikromechanischen Lamellenspiegel-Konstruktion als Strahlenteiler mit mindestens zwei Reflexionsstellungen;
- Fig.10:: die Kompensation von Phasenverschiebungen an Lamellenspiegeln nach Fig.9.

Die Figuren werden zusammenhängend beschrieben. Gleiche Bezugszeichen bedeuten gleiche Bauteile. Gleiche Bezugszeichen mit unterschiedlichen Indizes bedeuten ähnliche bzw. funktionsähnliche Bauteile. Die Erfindung ist nicht auf die dargestellten Ausführungsbeispiele eingeschränkt. Vor allem in Kombination mit den Lehren der oben angeführten Patentdokumente lassen sich noch beliebige Varianten darstellen. Sie alle fallen unter den Offenbarungsinhalt dieser Anmeldung.

Figur 1 zeigt eine Halbkreisscheibe 5c mit einem Schaltelement 3a, das verspiegelt ist. Der zweite Teil der Scheibe ist frei von Masse, um Störungen wie Bildversatz o.dgl. zu vermeiden. Am Rand ist lediglich als Massenausgleich ein Ausgleichsgewicht 40 montiert, das zur Drehachse 6 durch einen dünnen Balken 37 gehalten wird. Weitere Angaben können der Druckschrift WO 95/27226 entnommen werden, die Basis für diese Anmeldung ist.

Fig.4 zeigt eine Variante mit gleich langen linken und rechten Strahlengängen 1a und 1b und einem LCD-Shutter-Schaltelement 3d. Dieses könnte, alternativ zur Fig.5, wieder auf einer dünnen Glasscheibe 5 ausgebildet sein - gemäss Fig.11. Der im Bereich der Restfläche 5b entstehende Bildversatz ist dadurch kompensiert, dass in diesem Fall die Spiegelfläche des Schaltelementes 3a nicht an der dem Strahlengang 1b zugewandten Oberfläche der Scheibe 5, sondern beim LCD-Shutter-Element etwa in der Mitte der Scheibe an den dort befindlichen LCD-Elementen entsteht. Beide Strahlengänge 1a und 1b erleiden somit einen Bildversatz in die gleiche Richtung.

Das Wesen der Strahlengänge 1a und 1b bei der Anordnung in Fig.4 ist deren gleiche Länge bis zur Bildaufnahmevorrichtung 9. Diese gleiche Länge wird erzielt durch den symmetrischen Aufbau um die Mittelachse des Hauptobjektives 8, der durch zwei Umlenkspiegel 11a und 11b unterstützt ist. Diese könnten auch durch 30°-Prismen ersetzt werden. Entscheidend ist, dass sie entlang der dargestellten Pfeillinie verschoben werden können (vorzugsweise gleichzeitig und gleichmässig).

Der Spiegel liefert hier, wie auch bei den anderen Ausführungen, wie schon erwähnt, eine optimale Lichtintensität, da weder Verluste durch Polarisierung, noch Verluste durch die Benützung eines Teilers auftreten. Fig.4 zeigt eine CCD-Kamera als Bildaufnahmevorrichtung 9. Diese kann aber auch als jede andere Art Videokamera ausgeführt sein.

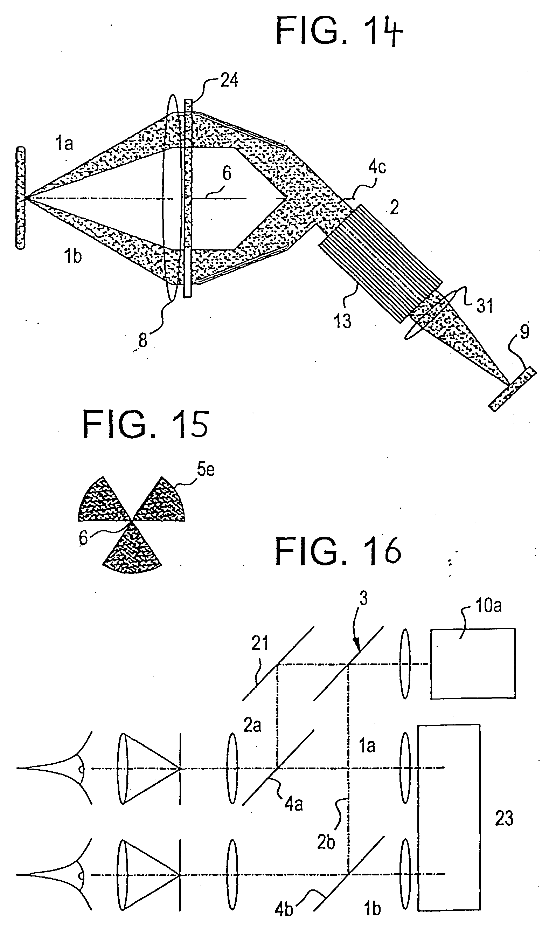

Der Antrieb der Scheibe 5 ist mit dem Auslesen der Bildaufnahmevorrichtung 9 zu synchronisieren. Es ist dabei vorteilhaft, wenn das Auslesen der Bildaufnahmevorrichtung 9 nur einen Teil der Zeit braucht, während der Spiegel einen der beiden Eintrittsstrahlenbündel der Vorrichtung zuführt. Aus dieser Vorgabe und der Rotationsgeschwindigkeit der Blende (50 Hz) ist die Taktfrequenz zur Auslesesteuerung der Aufnahmevorrichtung zu berechnen, vgl. Fig. 15.

Das in Fig. 1 gezeigte Schaltelement 3a weist eine gerade Trennlinie zwischen dem reflexiven und transmissiven Teil auf. Diese Trennlinie kann aber weiter optimiert werden. Fig.2 zeigt eine Variante dazu mit 3 reflektiven Kreisausschnittsflächen 5d, die eine Drehzahlreduktion des Schaltelements 3a erlauben.

Die gewonnenen Bilddaten werden entsprechend den angegebenen Patentanmeldungen weiterverarbeitet.

Im Sinne der Erfindung ist es nicht wesentlich, welche der vorbeschriebenen Schaltelemente 3 zur Anwendung gelangen, wenngleich eine rotierende Scheibe bevorzugt ist. Weiterhin könnte alternativ anstelle eines Schaltelementes auch ein herkömmlicher (z.B. Glas-) Strahlenteiler 4 eingesetzt werden, wobei dann in den Strahlengängen 1a und 1b abwechselnd ein aktives Wechselshutter-Element 3f als Blende eingeschaltet ist, das entweder den einen oder den anderen Strahlengang 1a oder 1b durchgängig macht. Insofern wird ausdrücklich auf die Fig.20 bis 26 verwiesen, die entsprechende Blenden darstellen.

Andere Varianten weisen in den Strahlengängen je eine Planplatte auf, die verschwenkt werden kann. Durch die Versatzwirkung der schräggestellten Planplatte ergibt sich eine Einstellmöglichkeit der Stereobasis d. Gemäss einer weiteren Variante ist ein Schwenkantrieb vorgesehen, der beide Planplatten synchron bewegt. Dazu sind die Planplatten über ein Gestänge mit dem Antrieb verbunden. Für bestimmte elektronische Auswerteverfahren - z.B. um eine Pixelschrift zu erreichen - ist es sogar denkbar, dass der Schwenkantrieb der Planplatten oszillierend vorgesehen ist.

Fig. 5 zeigt einen ersten Strahlengang 1 mit einer optischen Achse 7, der ein Hauptobjektiv 8 und ein Okular 18 beinhaltet. In diesem Strahlengang 1 befindet sich im Winkel von ca. 45° eine um eine Achse 6 drehbare Glasscheibe 5, die eine halbkreisförmige Fläche 5a aufweist, welche dem Objektiv 8 zugewandt verspiegelt ist. Die halbkreisförmige Restfläche 5b ist transparent. Wie symbolisch angedeutet, ist die Scheibe 5 von einem Elektromotor, z.B. einem Steppermotor 14, antreibbar. Befindet sich die Fläche 5a im Strahlengang 1, wird dieser in einen davon abgeteilten zweiten Strahlengang 2 gespiegelt. Befindet sich hingegen die Restfläche 5b im ersten Strahlengang 1, ist dieser gerade durchgehend frei bis zum Okular 18. Die Scheibe 5 wird derart zu einem mechanooptischen Schaltelement bzw. zu einer verspiegelten Blende 3a.

Fig. 6 zeigt eine Variante zur Fig. 5, bei der anstelle der Scheibe 5 ein oszillierend verschiebbarer Spiegel als Schaltelement 3b zum Einsatz gelangt. Dieses wird von einem Reziprokantrieb 15 angetrieben.

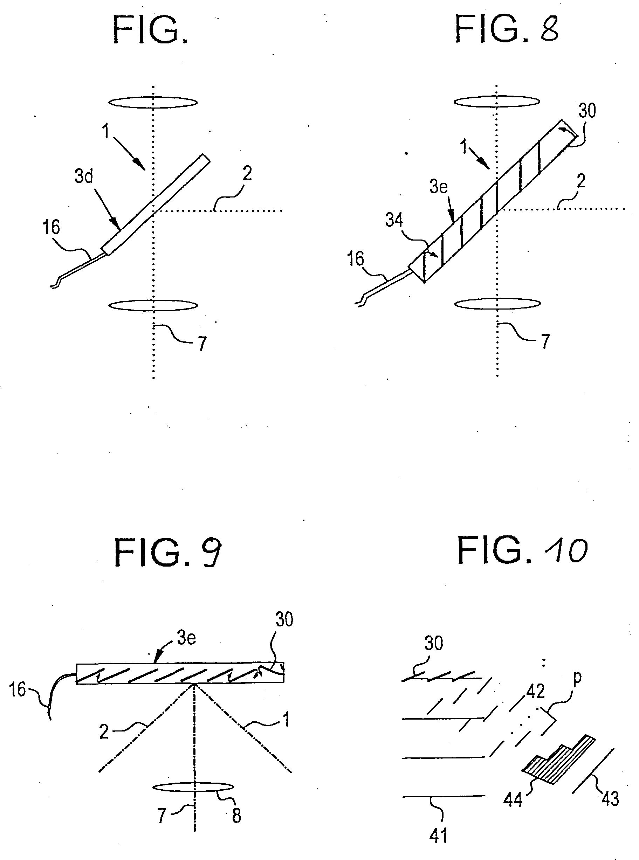

Fig. 7 zeigt eine weitere Variante zu Fig. 5 mit einem elektronisch schaltbaren Schaltelement (z.B. LCD) 3d, das z.B. aufgrund von Flüssigkristall-Änderungen von einem transmissiven in einen reflektiven Zustand übergeht. Es wird über Zuleitungen 16 gesteuert.

Fig. 8 zeigt eine weitere Variante zu Fig. 5 mit einem mechanooptischen Schaltelement 3e, das als mikromechanische Lamellenspiegel-Konstruktion ausgebildet ist. Die einzelnen, symbolisch angedeuteten Lamellenspiegel 30 sind, wie durch die Pfeile 34 angedeutet, so schwenkbar, dass sie jeweils etwa parallel zum ersten Strahlengang 1 oder jeweils schräg dazu liegen. Im ersten Fall ist der Strahlengang 1 durchgängig, im zweiten Fall wird er in den zweiten Strahlengang 2 gelenkt. Der äusserste rechte Lamellenspiegel 30 ist in dieser Position dargestellt.

Fig. 9 stellt ein weiteres mechanooptisches Schaltelement 3e, eine z.B. mikromechanische Lamellenspiegel-Konstruktion zur Einstellung von mindestens zwei Lamellenpositionen, dar. Lamellen 30 sind entweder um je eine mittige Achse oder um je eine Längskante der betreffenden Lamelle schwenkbar (vgl. die angedeuteten Pfeile). Durch diese Lamellen 30 ist ein reflektives Schalten zwischen Strahlengang 1 oder 2 möglich.

Fig. 10 beschreibt die Kompensation von Phasenunterschieden einzelner Teilwellen 42 an Lamellenspiegeln 30, ausgehend von einer ebenen Welle 41, an einer Phasenplatte 44 mit Ergebnis 43. Diese in Fig.11 und 12 dargestellte Erfindung kann auch unabhängig verwendet werden.

Fig. 11 zeigt eine Variante mit gleich langen linken und rechten Strahlengängen 1a und 1b und einem rotierendem Schaltelement 3a. Dieses ist, alternativ zur Fig. 1, wieder auf einer dünnen Glasscheibe 5 ausgebildet - gemäss Fig. 12.

Eines der Hauptmerkmale der Strahlengänge 1a und 1b bei der Anordnung in Fig. 11 ist deren gleiche Länge bis zum Zoom 13 bzw. bis zur Bildaufnahmevorrichtung 9. Diese gleiche Länge wird erzielt durch den symmetrischen Aufbau um die Mittelachse des Hauptobjektives 8, der durch zwei Umlenkspiegel 38a und 38b unterstützt ist. Diese könnten auch durch Prismen ersetzt werden.

Der Spiegel unterstützt hier, wie auch bei den anderen Ausführungen, wie schon erwähnt, eine optimale Lichtintensität, da weder Verluste durch Polarisierung, noch Verluste durch die Benützung eines Teilers auftreten. Fig. 11 zeigt eine CCD-Kamera als Bildaufnahmevorrichtung 9; diese kann aber auch als jede andere Art Videokamera ausgeführt sein.

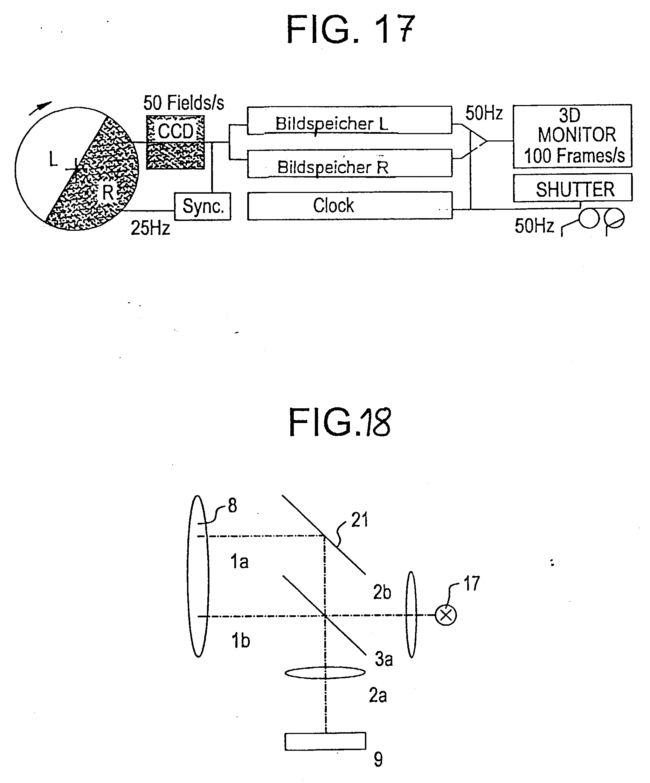

Der Antrieb der Scheibe 5 (z.B. Fig. 12 und Fig. 11) ist mit dem Auslesen der Bildaufnahmevorrichtung 9 zu synchronisieren. Es ist dabei vorteilhaft, wenn das Auslesen der Bildaufnahmevorrichtung 9 nur einen Teil der Zeit braucht, während welcher der Spiegel einen der beiden Eintrittsstrahlenbündel der Vorrichtung zuführt. Aus dieser Vorgabe und der Rotationsgeschwindigkeit der Blende ist die Taktfrequenz zur Auslesesteuerung der Aufnahmevorrichtung zu berechnen. Vorteilhaft werden die notwendigen Taktsignale mittels verschiedener Frequenzteiler aus dem Ausgangssignal eines Oszillators entnommen, wie man aus Fig. 17 (- in diesem Zusammenhang wird ausdrücklich auf die Schweizer Patentanmeldung 135/94 bzw. auf die darauf basierende PCT-Patentanmeldung verwiesen, die über die im Rahmen dieser Erfindung besonders vorteilhaft anzuwendende Technik zur Videosignalverarbeitung Auskunft gibt; die entsprechenden Angaben über die Speichertechnik der Halb-bzw. Vollbilder bzw. deren Umwandlung und Darstellung als Vollbild gelten als hierin geoffenbart -) ersehen kann.

Das in Fig. 12 gezeigte Schaltelement 3a weist eine gerade Trennlinie zwischen dem reflexiven und transmissiven Teil auf. Diese Trennlinie kann aber weiter optimiert werden. Eine solche optimierte Trennlinie kann durch Versuche gefunden werden.

Die gewonnenen Bilddaten werden mittels eines Speichers und eines speziellen Ausleseprozesses weiter verarbeitet, um das Flackern und das Bewegungszittern in den wiedergegebenen Stereobildern zu reduzieren. Hierbei ist zu bemerken, dass dieses Flackern und Zittern grundsätzlich in allen Systemen auftritt, in denen das linke und rechte Teilbild abwechselnd einer Aufnahmevorrichtung zugeleitet werden. Daher ist die erwähnte Auslesesteuerung nicht nur in dem vorher beschriebenen System, sondern in jeder Vorrichtung mit einem geometrischen Übereinanderlegen der linken und rechten Teilbilder anwendbar. Die Auslesesteuerung und die Vorrichtung zur Realisierung dieser Steuerung stellen deswegen eine selbständige Erfindung dar, die unabhängig von der Benützung der mechanischen Blenden weiter verfolgt werden kann.

Fig. 13 zeigt einen Aufbau für das Einspiegeln von Bildern von einem Display 10a in zwei Okularstrahlengänge 1c und 1d eines Stereomikroskopes. Dieser Aufbau - und auch jener von Fig. 16 - könnte anstelle des Displays 10a auch mit einer Bildaufnahmevorrichtung ausgerüstet sein. Eine solche könnte eventuell auch über einen zusätzlichen Strahlenteiler zusätzlich zum Display 10a angeordnet sein. Prismen erlauben auch hier eine gleiche Strahlengang-Länge. Das ebenso symbolisch dargestellte Schaltelement 3a erlaubt das Übertragen von aufeinanderfolgenden Bildern am Display aufeinanderfolgend in die beiden Strahlengänge 1c und 1d. Sinnvollerweise ist das Display mit einer nicht dargestellten Elektronik verbunden, die jeweils eines der aufeinanderfolgenden Bilder seitenverkehrt darstellt, um im stereoskopischen Blickfeld eines Betrachters zwei aufrechte, seitenrichtige Teilbilder sehen zu können.

Fig. 14 zeigt eine Variante zu Fig. 11 mit einer rotierenden Blende 24, die zur Drehzahlreduktion beispielsweise entsprechend der Fig. 15 ausgebildet sein kann, und einem Teiler 4c. Alternativ kann die Blende 24 auch als Schaltelement mit wenigstens zwei Verschlusslamellen - für jeden Strahlengang eine - ausgerüstet sein.

Der Aufbau gemäss Fig. 16 ist eine Variante zu Fig. 13 mit zwei Strahlenteilern 4a und 4b, von denen der eine mit einem starren Spiegel 21 zusammenwirkt und der andere mit einem elektrooptischen Schaltelement 3 von beliebiger Gestalt im Rahmen der Erfindung. Die Teile 21 und 3 geben abwechselnd die Sicht auf das Display 10a frei, dessen Bild den Okularstrahlengängen überlagert ist. Es kann sich dabei um ein stereoskopisches oder auch um ein monoskopisches Bild handeln.

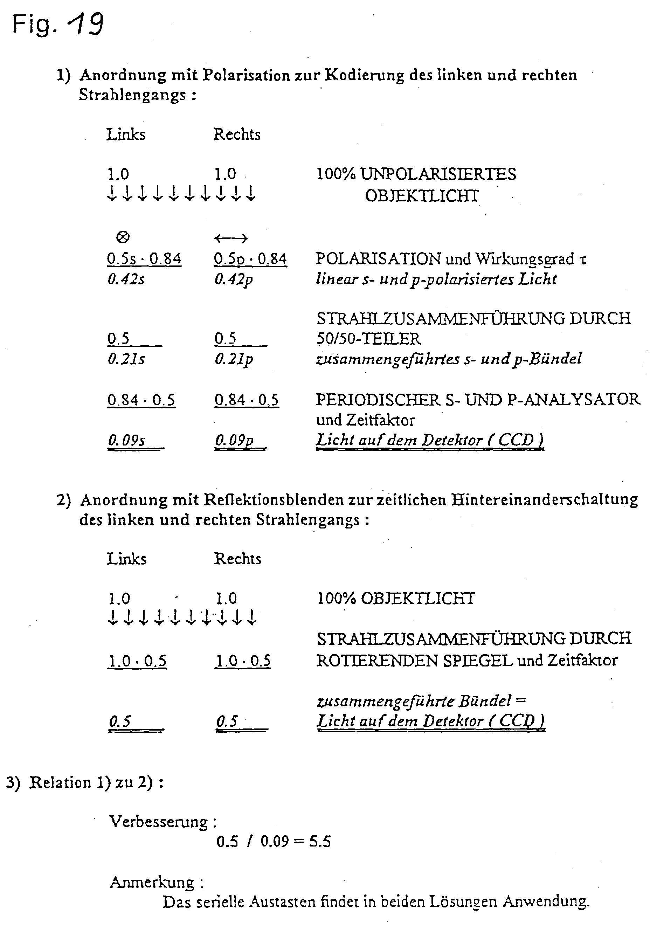

Der Aufbau gemäss Fig. 18 stellt eine Lösung mit integrierter Beleuchtung dar. Eine Lichtquelle 17 ist in direkter Verlängerung des Strahlenganges 1b angeordnet und das Schaltelement 3a ist beidseitig verspiegelt. In der gezeigten Stellung wird das Licht der Lichtquelle 17 über den einen Spiegel am Schaltelement 3a und über den Spiegel 21 in den Strahlengang 1a reflektiert. Die Lichtquelle beleuchtet derart das Objekt 22, während dieses bzw. sein Teilbild gleichzeitig über den anderen Spiegel am Schaltelement 3a bzw. über den Strahlengang 1b von der Bildaufnahmevorrichtung 9 aufgenommen wird. Wird das Schaltelement 3a auf Durchlässigkeit geschaltet, so beleuchtet die Lichtquelle 17 das Objekt über den Strahlengang 1b, während das andere Teilbild über den Strahlengang 1a aufgenommen werden kann. Die Lichtquelle kann auch als Stroboskop ausgebildet sein und sowohl mit der Bildaufnahmevorrichtung als auch mit dem Schaltelement 3a getaktet sein. Alternativ oder gleichzeitig kann über den Beleuchtungsstrahlengang 2b gegebenenfalls auch gemessen oder eingeblendet usw. werden.

Im Sinne dieses Aufbaus ist es nicht wesentlich, welche der vorbeschriebenen Schaltelemente 3 zur Anwendung gelangen, wenngleich eine rotierende Scheibe bevorzugt ist. Weiters alternativ könnte anstelle eines Schaltelementes auch ein herkömmlicher (z.B. Glas-) Strahlenteiler eingesetzt werden, wobei dann in den Strahlengängen 1a und 1b abwechselnd aktive Blenden eingeschaltet werden müssen, die entweder den einen oder den anderen Strahlengang 1a oder 1b durchgängig machen. Insofern wird ausdrücklich auf die Fig. 20 bis 26 verwiesen, die entsprechende Blenden beschreiben. Der Aufbau gemäss Fig. 18 bzw. seine Varianten können dementsprechend auch unabhängig verwendet werden.

Es mag vorteilhaft sein, für den Aufbau der rotierenden Schaltelemente 3 Pellicles zu verwenden. Das sind Rahmen, an denen praktisch gewichtslose Folien gespannt werden. Diese haben zum einen praktisch keinen Versatz und zum anderen sind sie sehr leicht, so dass Wuchtprobleme entfallen.

Die folgenden Ausbildungen bzw. Fig. 20 bis 26 sind auf die dargestellten Ausführungsbeispiele nicht eingeschränkt. Vor allem in Kombination mit den Lehren der oben angeführten CH-Patentanmeldungen und der anderen Figuren lassen sich noch beliebige Varianten darstellen. So sind - wie schon erwähnt - nicht nur rotierende und translatorische Bewegungen für die Blende denkbar, auch stationäre elektrooptische Blenden mit hundertprozentigem Umschaltvermögen und ohne Lichtintensitätsverlust im durchlassenden Bereich sind denkbar, ebenso wie mechanische Blenden, die ein- und ausgeschwenkt werden können. Verwendete Spiegel können in vielen Fällen auch durch ähnlich wirkende Prismen ersetzt werden. Alle diese Varianten fallen unter den Offenbarungsinhalt dieser Anmeldung.

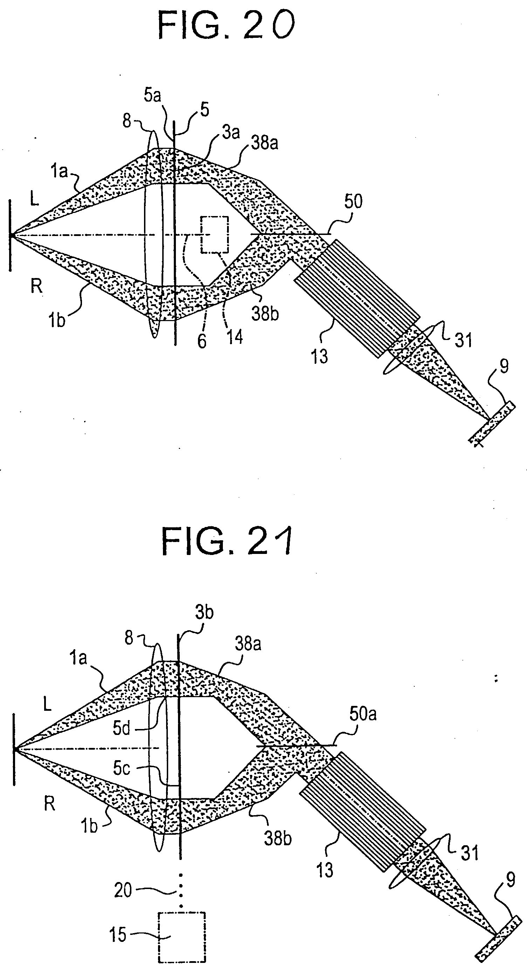

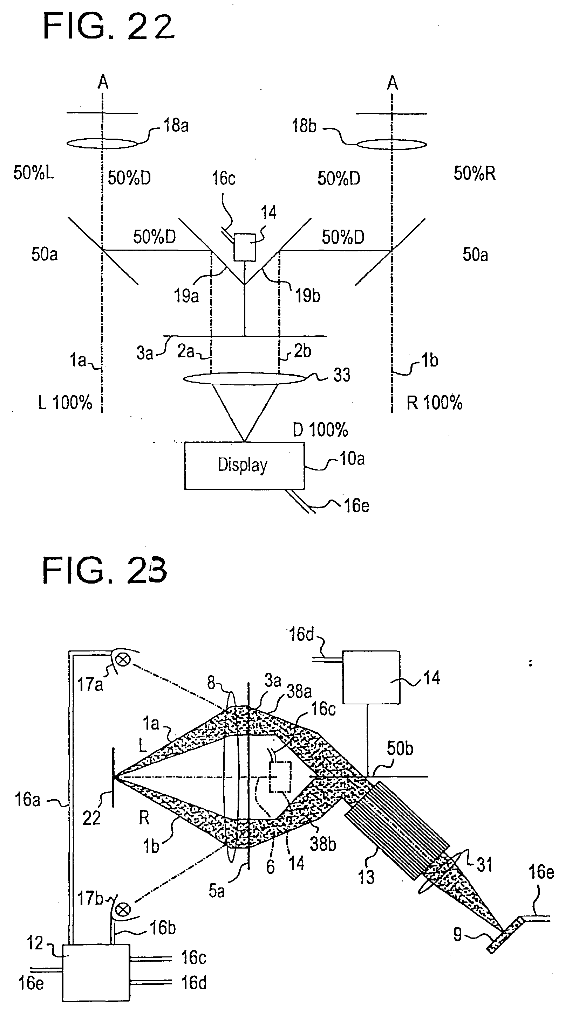

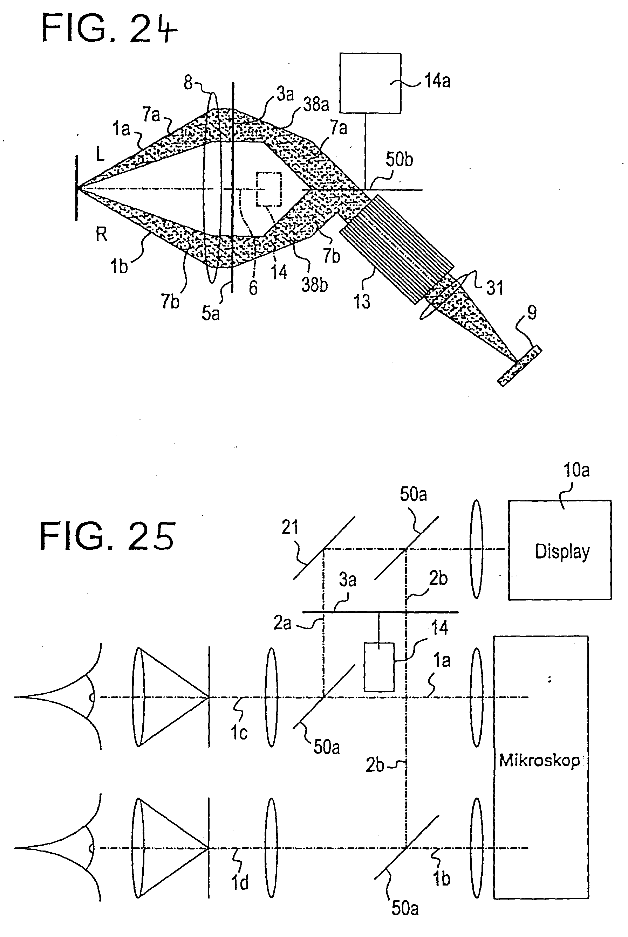

Fig. 22 zeigt einen Aufbau für das Aufnehmen von linken und rechten Teilbildern eines stereoskopischen Strahlenganges in zeitlicher Reihenfolge hintereinander. Wie im Aufbau nach Fig. 21 und Fig. 24 sind dabei der rechte und linke Strahlengang 1a und 1b gleich lang. Eine rotierende Blende 3a macht sie abwechselnd durchlassend oder sperrend. Diese ist auf einer dünnen Glasscheibe 5 ausgebildet, indem z.B. die Scheibe etwa hälftig schwarz und lichtundurchlässig 5a beschichtet ist (Fig. 12). Der im Bereich der vollständig durchlässigen (abgesehen von allfälliger Reflexion an der Glasscheibe, die vorzugsweise durch eine Antireflexionsbeschichtung vermindert wird) Restfläche 5b theoretisch entstehende Bildversatz ist dadurch kompensiert, dass er je nach Stellung der Scheibe 5 an beiden Strahlengängen 1a und 1b gleich wirkt. Die undurchlässige Fläche 5a der Scheibe 5 ist außerdem bevorzugt (oder - sofern die Verspiegelung lichtdicht ist - nur) verspiegelt, um von ihr abgeblendetes Licht in den jeweiligen Strahlengang 1a oder 1b zurückzuwerfen.

Die Strahlengänge 1a und 1b sind bei dieser Anordnung günstigerweise bis zum Zoom 13 bzw. bis zur Bildaufnahmevorrichtung 9 gleich lang. Diese gleiche Länge wird erzielt durch den symmetrischen Aufbau um die Mittelachse des Hauptobjektives 8, der durch zwei Umlenkspiegel 38a und 38b unterstützt ist. Diese konnten auch durch z.B. 30°-Prismen ersetzt sein.

Die beiden Spiegel 38a und 38b spiegeln die beiden Strahlengänge 1a und 1b an einen gemeinsamen Strahlenteiler 50a, durch den sie geometrisch übereinander gelegt werden. Der dabei in der Regel auftretende Verlust von ca. 50% der Lichtenergie ist der einzige bei diesem System auftretende Lichtintensitätsverlust, der in Kauf genommen werden muss. Gemäss der weiter oben beschriebenen Weiterbildung kann auch dieser Verlust vermieden werden, wenn an die Stelle des Strahlenteilers 50a ein Schaltelement 50b (Fig. 24) gesetzt wird, das zwischen einem reflektiven und einem transmissiven Zustand umschaltet, wie an den entsprechenden Stellen in der erwähnten Anmeldung beschrieben. Bei der dargestellten Erfindung treten jedenfalls keine Lichtintensitätsverluste durch einen Polarisator oder Analysator auf. Fig. 20, Fig. 21, Fig. 25 und Fig. 23 zeigen als Bildaufnahmevorrichtung 9 eine CCD-Kamera. Die Bildaufnahmevorrichtung 9 kann aber auch als jede andere Art Videokamera ausgeführt sein.

Der Antrieb (Motor 14) der Scheibe 5 ist mit dem Auslesen der Bildaufnahmevorrichtung 9 zu synchronisieren. Es ist dabei vorteilhaft, wenn das Auslesen der Bildaufnahmevorrichtung 9 nur einen Teil der Zeit braucht, während der die Blende einen der beiden Eintrittsstrahlenbündel der Vorrichtung 9 zugänglich macht. Aus dieser Vorgabe und der Rotationsgeschwindigkeit der Blende (z.B: 50 Hz) ist die Taktfrequenz zur Auslesesteuerung der Aufnahmevorrichtung 9 zu berechnen. Vorteilhaft werden die notwendigen Taktsignale mittels verschiedener Frequenzteiler dem Ausgangssignal eines Oszillators (Clock) entnommen, wie man aus Fig.15 ersehen kann. Eine Drehzahlreduktion kann erzielt werden, wenn eine Blende 3b gemäss Fig. 1 gewählt wird, deren drei sperrende Flächen 5c kreissegmentförmig ausgebildet sind. In Fig. 23 sieht man symbolisch angedeutet, dass die entsprechenden Antriebe 14 für die drehbaren Scheiben von einer gemeinsamen Steuerung 12 angesteuert sind, die auch die Taktung der Bildaufnahmevorrichtung 9 und die Taktung einer allfälligen Stroboskopbeleuchtung 17a und 17b übernimmt.

Eine solche Stroboskopbeleuchtung wird bei jenen Anordnungen erfolgreich eingesetzt, bei denen die Blende 3a zusätzlich verspiegelt ausgebildet ist. In der in Fig. 23 gezeigten Position der Blende 3a gibt beispielsweise die Stroboskoplampe 17b einen Lichtblitz ab, der über die Fläche 5a in den Strahlengang 1b reflektiert wird und derart das Objekt 22 beleuchtet. Spätestens nach einer 180°-Drehung von 3a beleuchtet ein Lichtblitz aus der Stroboskoplampe 17a das Objekt 22 über den Strahlengang 1a.

Das in Fig. 12 gezeigte Schaltelement 3a weist eine gerade Trennlinie zwischen dem reflexiven und transmissiven Teil auf. Diese Trennlinie kann aber weiter optimiert werden.

Die gewonnenen Bilddaten werden, wie beispielsweise in Fig. 17 angedeutet, mittels eines Speichers und eines speziellen Ausleseprozesses weiter verarbeitet, um das Flackern von und das Bewegungszittern in den wiedergegebenen Stereobildern zu reduzieren. Hierbei ist zu bemerken, dass dieses Flackern und Zittern grundsätzlich in allen Systemen auftritt, in denen das linke und rechte Teilbild abwechselnd einer Aufnahmevorrichtung zugeleitet werden. Daher ist die erwähnte Auslesesteuerung nicht nur in dem vorher beschriebenen System, sondern in jeder Vorrichtung mit einem geometrischen Übereinanderlegen der linken und rechten Teilbilder anwendbar. Die Auslesesteuerung und die Vorrichtung zur Realisierung dieser Steuerung stellen deswegen eine selbständige Erfindung dar, die unabhängig von der Benützung der mechanischen Blenden weiter verfolgt werden kann.

Fig. 21 zeigt eine Variante zur Fig. 20, bei der anstelle der Scheibe 5 eine oszillierend verschiebbare Blende als Schaltelement 3b zum Einsatz gelangt. Dieses wird von einem Reziprokantrieb 15 angetrieben. Die Blende umfasst dabei zwei sperrende Flächen 5d und 5e, die z.B. auf einer rechteckigen Glasscheibe so angebracht sind, dass in der einen (gezeigten) Stellung der Strahlengang 1a gesperrt ist und in der anderen der Strahlengang 1b. Anstelle einer Glasscheibe könnte eine solche Blende 3b beispielsweise auch aus Blech aufgebaut sein, bei der lediglich die freibleibenden Bereiche der Blende ausgestanzt sind.

Fig. 9 der CH-Patentanmeldung zeigt ein elektronisch schaltbares Schaltelement (3d), das z.B. aufgrund von Flüssigkristall-Änderungen von einem transmissiven in einen reflektiven Zustand übergeht. Zwei solche Elemente könnten beispielsweise anstelle der Blenden 3a oder 3b in die Strahlengänge 1a und 1b eingesetzt sein, um entsprechend die Lichtdurchlässigkeit abwechselnd zu sperren.

Als weitere Variante zu 3a und 3b wären die mechanooptischen Schaltelemente 3e, die als mikromechanische Lamellenspiegel-Konstruktion gemäss Fig. 8 ausgebildet sind, denkbar, wobei dann vorzugsweise je eine solche Lamellenkonstruktion in jeden Strahlengang 1a, 1b gesetzt wird.

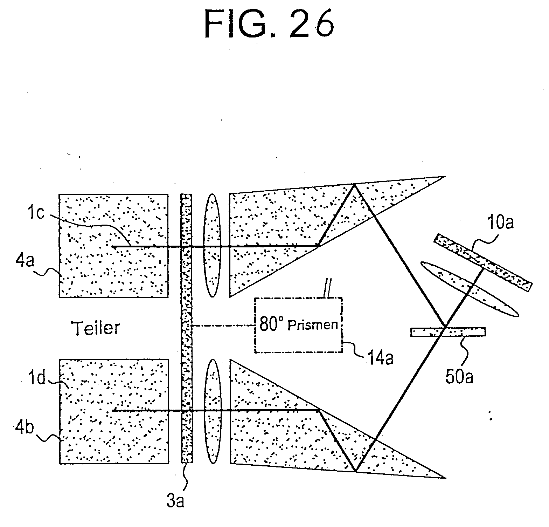

Fig. 26 zeigt einen Aufbau für das Einspiegeln von Bildern von einem Display 10a in zwei Okularstrahlengänge 1c und 1d eines Stereomikroskopes. 30°-Prismen erlauben auch hier eine gleiche Strahlenganglänge. Die ebenso symbolisch dargestellte Blende 3a erlaubt das Übertragen von aufeinanderfolgenden Bildern am Display aufeinanderfolgend in die beiden Strahlengänge 1c und 1d. Sinnvollerweise ist das Display mit einer nicht dargestellten Elektronik verbunden, die jeweils eines der aufeinanderfolgenden Bilder seitenverkehrt darstellt, um im stereoskopischen Blickfeld eines Betrachters zwei aufrechte Teilbilder sehen zu können.

Der Aufbau gemäss Fig. 25 ist eine Variante zu Fig. 26 mit zwei Strahlenteilern 50a und 50b, von denen der eine mit einem starren Spiegel 21 und der andere mit einem dritten Strahlenteiler 50a zusammenwirkt. Eine erfindungsgemässe Blende 3a gibt abwechselnd für die Strahlengänge 2a und 2b die Sicht auf das Display 10a frei, dessen Bild den Okularstrahlengängen überlagert ist. Es kann sich dabei um ein stereoskopisches oder auch um ein monoskopisches Bild handeln. Im letzteren Fall kann auf die Blende 3a verzichtet werden.

Der Aufbau gemäss Fig. 22 arbeitet mit einem Pupillenteiler 19 aus zwei Umlenkspiegeln 19a und 19b, die je die Hälfte der Bildinformation, wie sie von dem Display 10a geliefert wird, zum Strahlengang 1a bzw. 1b umlenken. Im Schnittpunkt der Strahlengänge 2a und 2b mit 1a und 2a sind Strahlenteiler 50a angeordnet, die die geometrische Überlagerung der beiden Strahlengänge 1a und 2a bzw. 1b und 2b erlauben. Eine erfindungsgemässe rotierende Blende 3a deckt alternierend die entsprechenden Bereiche vor dem Pupillenteiler 19a, so dass jeweils nur einer der beiden Strahlengänge 1a oder 1b mit der Bildinformation versorgt wird. Schaltet dementsprechend das Display jeweils zwischen einem rechten und einem linken Teilbild um, entsteht für einen Betrachter am Okular 18a und 18b ein stereoskopisches Bild, das sich dem 3-D-Bild aus den Strahlengängen 1a und 1b überlagert. Aus diesem Aufbau kann man sich den Einsatz eines zweiten Displays 10 ersparen. Das erfindungsgemässe Stereomikroskop baut dementsprechend kleiner.

Die zuletzt beschriebene Weiterbildung betrifft somit ein Stereomikroskop, bei dem zwei Strahlengänge 1a,b;2a,b geometrisch überlagert, aber zeitlich hintereinander lichtdurchgängig sein sollen. Die bekannten Nachteile, wie hoher Lichtverlust durch Polarisatoren und Analysatoren oder wie ungewolltes zeitgleiches Überlagern von Bildinformationen, sollen vermieden werden. Gelöst wird dies durch eine mechanische Blende 3, die entweder den einen oder den anderen Strahlengang 1a,b;2a,b freigibt und den jeweils anderen sperrt.

### Bezugszeichenliste

1a,b erster Strahlengang
1' verschobener erster Strahlengang
2a,b zweiter Strahlengang (geometrisch übereinander gelegte erste Strahlengänge)
2' verschobener zweiter Strahlengang
3 mechanooptisches Schaltelement
   3a,b,c undurchlässige und vorzugsweise verspiegelte Blende
   3d LCD-Shutter-Element
   3e mikromechanische Lamellenspiegel-Konstruktion
   3f LCD-Wechselshutter-Element
4 Strahlenteiler
   4a,b,c Strahlenteiler
5 Scheibe
   5a halbkeisförmige Fläche
   5b Restfläche der Scheibe (5)
   5c Kreissegmentflächen
   5d
6 Achse für Scheibe
7 Mittelachse
   7a,b Mittelachse
8 Hauptobjektiv
9 elektronische Bildaufnahmevorrichtung
10 Display
   10a Display
11a,b Spiegel
12a,b,c Verstelleinrichtung
13 Zoom
14a,b Motor
15 Reziprokantrieb
16 Zuleitung
17 Lichtquelle
18 Okular
19 Umlenkspiegel
20 Schubstange
21 starrer Spiegel
22 Objekt
23a,b,a',b';c,d Planplatte
24 Schwenkantrieb
25 Gestänge
30 Lamellenspiegel von (3e)
31 Tubuslinse
33 Vergrösserungsoptik
34 Pfeile
35 weiterer Spiegel
36 Stellantrieb
37 Balken
38a,b Umlenkspiegel
39 Retroprisma
40 Ausgleichsgewicht
41 ebene Welle
42 Teilwellen
43 Ergebnis
44 Phasenplatte
50a,b Strahlenteiler
d Stereobasis
p Phasenshift

Die in dieser Bezugszeichenliste aufgeführten Bezugszeichen beziehen sich auch auf Bauteile der erwähnten und folgenden PCT-Patentanmeldungen WO 95/27918 und WO 95/27917, die zusammen mit den vorliegenden Erfindungen bevorzugt verwendet können.

## Patentansprüche

1. Stereomikroskop, **dadurch gekennzeichnet,** dass die beiden ersten Strahlengänge (1a,1b) durch Lichtlenkelemente, insbesondere Spiegel (11), so gelenkt sind, dass sich ihre Mittelachsen (7a,7b) in einem Winkel - vorzugsweise 90° - schneiden, und dass an der Schnittstelle - insbesondere durch den Schnittpunkt der Achsen (7a,7b) - ein Strahlenteiler bzw. ein Schaltelement(3) eingesetzt ist, wobei in der direkten Verlängerung eines der ersten Strahlengänge (1a) eine Bildaufnahmevorrichtung (9) - zur Erregung letzterer im transmissiven Zustand des Strahlenteilers bzw. das Schaltelement(3) - angeordnet ist, während der andere der ersten Strahlengänge (1b) über die verspiegelte Fläche im reflektiven Zustand des Strahlenteilers bzw. des Schaltelements(3) als zweiter Strahlengang (2) der Bildaufnahmevorrichtung (9) zugeführt ist.

2. Stereomikroskop nach Anspruch 1, **dadurch gekennzeichnet,** dass das mechanooptische Schaltelement (3a) schrittförmig - z.B. von einem Steppermotor - antreibbar ist und in einem gewählten Schaltzustand kurzzeitig verweilt, und/oder dass im Falle einer nachgeschalteten elektronischen Bildaufnahmevorrichtung (9) eine vorzugsweise elektronische Belichtungssteuerung vorgesehen ist, die ihrerseits die Bildaufnahmevorrichtung (9) mit dem Schaltelement (3) getaktet abwechselnd kurzzeitig aktiviert und deaktiviert.

3. Stereomikroskop nach einem der vorhergehenden Ansprüche, **dadurch gekennzeichnet,** dass das mechanooptische Schaltelement (3) schrittförmig - z.B. von einem Steppermotor - antreibbar ist und in einem gewählten Schaltzustand kurzzeitig verweilt, und/oder dass im Falle einer nachgeschalteten elektronischen Bildaufnahmevorrichtung (9) eine vorzugsweise elektronische Belichtungssteuerung vorgesehen ist, die ihrerseits die Bildaufnahmevorrichtung (9) mit dem Schaltelement (3) getaktet abwechselnd kurzzeitig aktiviert und deaktiviert.

4. Stereomikroskop nach einem der vorhergehenden Ansprüche, **dadurch gekennzeichnet,** dass das Schaltelement (3) aus einer mikromechanischen Lamellenspiegel-Konstruktion (3e) aufgebaut ist, deren Lamellenspiegel (30) oszillierend aus- und eingeschwenkt werden können.

5. Stereomikroskop nach einem der vorhergehenden Ansprüche, **dadurch gekennzeichnet,** dass das Schaltelement als verspiegelte Blende (3a) ausgeführt ist, die vorzugsweise an einer halbkreisförmigen Scheibe (5c) ausgebildet ist, die um eine Achse (6) drehbar ist, welche vorzugsweise die Mittelachse (7) des ersten Strahlenganges (1) schneidet.

6. Stereomikroskop nach Anspruch 5, **dadurch gekennzeichnet,** dass mehrere verspiegelte Blenden (3a) als Kreissegment Flächen (5d) um eine Achse (6) drehbar angeordnet sind.

7. Stereomikroskop nach Anspruch 1, **dadurch gekennzeichnet,** dass das Schaltelement so ausgebildet ist, dass seine Verspiegelung beidseitig wirkt, und dass in direkter Verlängerung des anderen der ersten Strahlengänge eine Lichtquelle angeordnet ist, so dass, während der Bildinhalt des einen ersten Strahlenganges (1b oder 1a) der Bildaufnahmeeinheit (9) zugeführt wird, das Objekt über den anderen ersten Strahlengang (1a oder 1b) unter dem Hauptobjektiv (8) beleuchtet wird.

8. Stereomikroskop nach einem der vorhergehenden Ansprüche, **dadurch gekennzeichnet,** dass die Länge eines der ersten Strahlengänge (1a) der Längenaddition des anderen ersten Strahlenganges (1b) zuzüglich des zweiten Strahlenganges (2) entspricht.

9. Stereomikroskop mit einem ersten und einem zweiten Strahlengang (1a,1b;2a,2b) und wenigstens einem bzw. je einem Strahlenteiler (50a oder 50b) in diesem Strahlengang (1a,1b;2a,2b), wobei beide Strahlengänge (1a und 1b; 2a und 2b) geometrisch miteinander und/oder mit je einem anderen Strahlengang (1c,1d) überlagerbar sind, und mit je einer Shuttervorrichtung in jedem Strahlengang (1a,1b oder 2a,2b) nach einem der vorhergehenden Ansprüche, **dadurch gekennzeichnet,** dass jede Shuttervorrichtung als wenigstens eine Blende (3) ausgebildet ist, die den betreffenden Strahlengang alternierend lichtdurchgängig macht oder lichtdicht sperrt, wobei gleichzeitig die Blenden (3) so miteinander gekoppelt sind, dass entweder der eine Strahlengang (1a;2a) oder der andere Strahlengang (1b,2b) lichtdurchlässig ist.

10. Stereomikroskop nach Anspruch 9, **dadurch gekennzeichnet,** dass im einen Strahlengang wenigstens zwei Blenden (3 und 50b) vorgesehen sind, die hintereinander angeordnet sind und synchronisiert betrieben werden.

11. Stereomikroskop nach Anspruch 9 oder 10, **dadurch gekennzeichnet,** dass die Blende in den betreffenden Strahlengang (1a,1b;2a,2b) oszillierend einbringbar - insbesondere einschwenkbar oder einschiebbar - ist.

12. Stereomikroskop nach einem der vorhergehenden Ansprüche, **dadurch gekennzeichnet,** dass die beiden Strahlengänge (1a,1b) gleich lang sind, und dass eine mechanische Blende (3) vorgesehen ist, die entweder den einen oder den anderen Strahlengang (1a oder 1b) sperrt.
